# EUROPEAN PATENT APPLICATION

(11) **EP 3 594 291 A1**
(43) Date of publication of application: **15.01.2020**
(21) Application number: 19460030.0
(22) Date of filing: 06.06.2019
(51) Int. Cl.: C09D 5/33, C09D 5/02, C09D 7/40

(54) **THE METHOD OF MANUFACTURING COATINGS AND THERMOREFLEXIVE AND THERMO-INSULATING MATERIALS**

(30) Priority: 07.06.2018 PL 42583718
(71) Applicant: AD ALIO Sp. z o.o., 15-264 Bialystok (PL)
(72) Inventor: Jerzy, Jan Socha, 41-407 Imielin (PL); Miroslaw, Ireneusz Patej, 15-339 Bialystok (PL)

(57) **Abstract**

The invention is directed to methods of manufacturing thermoreflexive and thermoinsulating coatings comprising microspheres and an aqueous dispersion of resin based on acrylic and/or styrene-acrylic monomers and/or alkyd and/or vinyl acetate and its copolymers. The coatings are characterized by a total solar radiation reflection coefficient (TSR) for the spectrum from 400 nm to 1600 nm at a level from 92 to 97% while providing a material flexibility of up to 400%, preferably 300% flexibility.

## Description

The present invention relates to a method of manufacturing coatings and thermoreflexive and thermoinsulating materials.

The existing materials, especially the surfaces, paints or masses, do not provide sufficient thermal insulation and thermoreflectivity of coated materials, thus causing heat and energy losses.

The purpose of the invention is to develop a new method of producing thermo-reflective, thermo-insulating coatings, especially paint coatings - paints or plasters - plasters and thermo-reflective, thermo-insulating coatings, which are to be characterized by the total reflection coefficient of visible and infrared radiation (TSR) for the spectrum from 400 nm to 2400 - nm at a level of 92 to 97% while ensuring the elasticity of the coating material at a level of up to 400%, preferably 300% flexibility. Such increased thermal insulation and thermoreflectivity of coated materials will provide additional profit in the form of saved and partly stored heat and energy.

From the Polish patent specification No. PL183680 a heat-insulating plate is known, having the structure of a multi-layer package of materials with heat-insulating properties, composed of at least two material layers separated by a gap, tightly closed on the periphery of the plate, in which the adjacent surfaces of the material layers are covered with a gas-tight material coating high reflection coefficient and in which the material layers are fixed relative to each other by spacers, formed by interlocked projections and cavities made on both adjacent surfaces of the material layers, separated by a gap, with a tensile element arranged in a zigzag pattern between the tops of the protrusions of both material layers made of high-strength fiber, especially aramid, foil or mesh of fibers embedded in the foil, in addition, the plate is equipped with a suction nozzle, tightly connected to the coating, the outer layer led through the material layer and ended with a cut-off element, while a high vacuum is created in the gap between the material layers, characterized by the fact that it has rims that form an overlap (6) made of a material layer (1) terminated with a recess (4), the overlap (6) has a concave surface relative to the median plane and the foil tendon element (5) is tightly attached to the front surface (7) of the overlap (6) and separately to each top of the projections (3) inside the plate.

From the Polish patent application No. P.279552, an inorganic thermal insulation compound and a method of producing an inorganic thermal insulation compound are known.

From the Polish patent application no. P.329343 is known a heat-insulating composite material.

From the Polish patent specification No. 198691 a method of making a heat-insulating layer with vapor-permeable properties on the surface of building objects is known, in which the heat-insulating core is polyurethane foam, characterized in that the solid rigid heat-insulating core is made of polyurethane foam with a density of 22 - 70 kg / m2 from the predominance of closed pores, preferably containing expanded polystyrene with a thickness of 30 - 300 mm, and the external surface of the insulated building object is separated from the thermal insulation core with a spacer made of a material with a loose, airy structure, the total thickness of the layer being not less than 40 mm.

From the Polish patent specification No. PL200752 a method of producing heat-insulating materials from polyethylene terephthalate - PET waste is known, consisting in the fragmentation of PET plastic containing up to 40% by weight of impurities, mixing with a binder, preferably in the form of a thermosetting or thermosetting glue and pressing in forms, characterized in that the raw material is waste directly from the landfill, for example in the form of PET packaging with wall thickness above 0.25 mm and the resulting granules in the shape of flakes with an apparent density of 170 - 400 kg / m3 in an amount of at least 60 The wt% of the obtained product is concentrated during pressing to obtain a product density of 200 - 715 kg / m3.

From the Polish patent application No. 406993 an invention is known, which relates to a method of producing building material with thermal insulation properties, in particular in the form of bricks, plates or hollow blocks, intended for making walls in residential buildings. The method consists in preparing a raw material mixture containing as mineral filler 50 - 75% by weight of waste perlite dust with grain size less than 200 µm and silica content over 70% by weight, and as a mineral binder 4 - 9% by weight hydrated lime. The ingredients are homogenized dry using ribbon or rotary-vibration mixers operating in a closed system or pneumatic method for 5 - 10 minutes, after which water is added in an amount of 20 - 45% by weight and further mixed for another 5 - 10 minutes, until obtaining a homogeneous production mass with a moisture content of 4 - 6% by weight. Then the molded parts are formed by pressing at a pressure of 5 - 10 MPa, after which they are subjected to hydrothermal treatment in an autoclave, at a temperature of 180 - 200 ° C for 6 - 8 hours.

From the Polish patent application No. 412011 is known a method of manufacturing plastering insulation mortar for thermal and / or acoustic insulation from material containing mineral and cellulose fibers. The method is characterized in that the dispersed material containing mineral and cellulose fibers is mixed with a previously formed airgel structure in the form of a 10 to 20-fold foamed aqueous solution of inorganic acid salts, preferably sodium and / or potassium silicates and expanded mineral and / or polymer fillers, to obtain foamed, insulating plaster mortar, and then by means of hydrodynamic and / or mechanical devices or manually prepared mortar is applied to the place of application.

A new composition based on calcium hydrosilicates with a fibrous structure and optionally a small amount of inorganic and / or organic fibers introduced into it is known from European patent specification EP0220219. The invention also relates to a wet process for preparing such compositions and the use of the new material obtained for applications requiring good insulating properties and mechanical strength.

From Chinese Patent No. CN107556862 is known the boat hull thermal insulation, energy saving method and how to prepare it. The hull paint of the boat with energy-saving thermal insulation consists of 15% -45% high infrared reflecting compound, 11% -15% cellulose ether, 8% -15% water-borne acrylic resin, 6% -23% water-borne polyurethane resin, 5.5 % -8% silane decoupling agent, 5.5% -10.5% silicon dioxide airgel microspheres, 2.3% -10% hydroxyethyl cellulose, 7.8% -30% phenolic resin, 3% -18% micro dioxide powder titanium, 7.5-10% modified acrylic emulsion, 5% -30% infrared ceramic powder, 8.2% -10.5% propylene glycol, 5.5% -7.8% ethylene glycol, 16% - 30 parts of vermiculite powder and 15% -34% of excipients. An energy-saving type of boat's thermal insulation is a source of energy for the insulation industry.

From Chinese Patent No. CN107629592, an invention is known which discloses a method for producing a composite thermal insulation paint. The method includes: weighing thermosetting acrylic resin, iron oxide, titanium dioxide, asbestos, organic silicon, aluminosilicate fiber, rock cotton fiber, floating ash, polyurethane, zinc oxide, silicon carbide, lithopone, ethanol, antimony trioxide and xylene. The paint can tolerate a high temperature of 900o C and does not fall off, it is resistant to acids and alkalis, has excellent moisture resistance and good fire resistance.

From Chinese Patent No. CN107619217 an invention is known which discloses a fireproof heat insulating material with high weather resistance. Highly resistant fireproof insulation material contains inorganic raw material, organic raw material and fiber mixture, the inorganic raw material contains the following components by weight: 18-55 parts of metallic aggregate, 15-44 parts of filler (silicon dioxide powder), 10-36 parts of ground calcium carbonate in powder, 25-79 parts of a sulfate mixture, 25-66 parts of a silicate mixture, 10-48 parts of a special binder and 31-56 parts of a foaming agent; the inorganic raw material contains the following ingredients by weight: 15-26 parts of acrylic resin powder and 13-26 parts of polyurethane powder; and the fiber mixture contains the following ingredients by weight: 25-62 parts of asbestos fibers and 11-17 parts of metal fibers.

The method of the invention is **characterized in** that, microspheres are joined and mixed up to an aqueous dispersion of resin based on acrylic and / or styrene-acrylic monomers and / or alkyd and / or vinyl acetate and its copolymers preferably such as OW / ethylene, whereby the microspheres are combined with maintaining the ratio of the microspheres used as a percentage by volume to the aqueous dispersion of the resin, maintaining the vol.% ratio for specific product types, where:
a) for paint coatings:
   1. internal paint coating: 20-42% microspheres up to 38-19% of the resin used, calculated by volume, with the minimum total content of microspheres and resin being (**20 + 38 = 58**) vol.% while max. content from (**42 + 19 = 61**)% vol, and the remaining part up to 100% vol. are pigments, fillers and auxiliaries including preservative and coating biocide;
   2. outer paint coating: 18-42% microspheres up to 43-24% of the resin used, calculated by volume, the minimum total content of microspheres and resin is **(18 + 43 = 61)**% vol, while max. content with **(42 + 24 = 66)** vol% and the remaining part up to 100% vol. are pigments, fillers and auxiliaries including preservative and coating biocide.
   3. roof paint: 28-46% of microspheres up to 43-28% of the volume-based resin used
      the minimum total content of microspheres and resin is (**28 + 43 = 71)** vol % while
      max. content from (**46 + 28 = 74)% vol.** and the remaining part up to 100% vol. are pigments, fillers and auxiliaries including preservative and coating biocide.
b) for plasters:
   the ratio of microspheres to 62-28% to resin is in the range (20-42)% by volume.
   the minimum total content of microspheres and resin is **(62 + 20 = 82)** vol % while max. content with **(28 + 42 = 70) vol%** and the remaining part up to 100% vol. are pigments, fillers and auxiliaries including preservative and coating biocide.
c) for coatings with anti-condensation properties:
   ratio of microspheres ranging from 20-38% to resin 44-35% by volume
   while for each of the products the ratio of the volume of microspheres to resin is preferably in the form of 2: 1, while the final coating obtained in this way is characterized by the total solar radiation reflection coefficient (TSR) for the spectrum from 400 nm to 1600 nm at a level from 92 to 97% while providing a material flexibility of up to 400%, preferably 300% flexibility.

The microspheres are evenly distributed in the resulting coating.
The microspheres are microspheres of glass, ceramic, polymer origin or a mixture thereof, the microspheres having sizes ranging from 1 µm to 100 µm, preferably 1/3 of the microspheres being thermal traps.
The final coating is applied to other materials such as walls, old walls, walls, mineral wool, polystyrene and / or their arrangement or metal elements such as pipes.
The final coating is vapor-permeable.
In place of the resin an acrylic resin is used at a level of up to 50% by volume with the simultaneous addition of biocide in an amount of up to 0.4% by volume, thereby obtaining a coating with additional anti-condensation properties.
The final coating is applied as a layer and / or layers with a total thickness of 0.5 to 30 mm, preferably 3 mm, on materials preferably such as: walls, old walls, walls, mineral wool, polystyrene and / or their arrangement, while the applied layer (s) is a mirror, i.e. a thermo reflective coating, while also constituting an additional thermal barrier.
Microspheres and resin are added to 4% by volume, with the following being used as additives: protective elements such as dyes, fungicides and molds, as well as UV protection.

In another embodiment, the method of the invention is **characterized in** that, microspheres are joined and mixed up to an aqueous dispersion of resin based on acrylic and / or styrene-acrylic monomers and / or alkyd and / or vinyl acetate and its copolymers preferably such as OW / ethylene, wherein the microspheres are combined with maintaining the ratio of the microspheres used in volume percent to the aqueous dispersion of the resin while maintaining the ratio, where for plaster masses the ratio of microspheres to 62-28% to resin is in the range (20-42)% by volume; the minimum total content of microspheres and resin is **(62 + 20 = 82)** vol % while max. content with **(28 + 42 = 70) vol%,** at the same time, to the whole mixture - mass, up to 4% by volume of protective elements such as dyes, fungicidal and mildewcide substances and UV protection are added;
while for each of the products the ratio of the volume of microspheres to resin is preferably in the form of 2: 1, while the final coating obtained in this way is characterized by the total solar radiation reflection coefficient (TSR) for the spectrum from 400 nm to 1600 nm at a level from 92 to 97% while providing a material flexibility of up to 400%, preferably 300% flexibility.

The present invention relates to a method of producing coatings with thermoreflective properties, consisting of reflection of solar and thermal radiation from the substrate as well as the production of internal and external plastering thermal masses in general, historic and insulating masses in heating, constituting a thermal barrier and at the same time a thermo-reflective coating.
The growing construction market has caused a greater demand for electricity for cooling in summer and heating in winter. Understanding the nature of the action has created a demand for thermo-reflective and thermo-insulating products (combined) these products cause large savings in electricity and heat. Coatings and partitions reflecting solar and thermal radiation (IR) are characterized by a high percentage of reflection in the range of thermal infrared radiation. This can be achieved thanks to the presence in the prescription composition microspheres.
In our solution, we use mixtures of glass, ceramic, polymer spheres and our own production, etc. In addition to thermal infrared radiation, anti-condensation is also significant for paint coatings, i.e. the lack of condensation on the surface of the walls, which permanently protects the surface against the formation of various type of outbreaks of bacteria, fungi on the basis of moisture.
Paint coatings, technical masses and thermo-reflective plasters - thermo-insulating plasters contain microspheres, which are used as the basic component of the recipe specified in volume percent in relation to acrylic, acrylic-styrene dispersion and vinyl acetate copolymer, the quantity of which was also specified in volume percent. The anti-condensation property in paint coatings is very strongly dependent on the amount of aqueous dispersion used in excess of the microspheres used.
In the case of plastering and heating masses, the number of microspheres in percentage by volume is in a significant advantage to the water dispersion or their composition used, and besides the fact that the masses are highly reflective, due to the thickness from 5 mm up to 40 mm, they constitute a better and more durable thermal barrier than wool or polystyrene.
The key in the invention is the relationship of the microspheres used and their compositions to the aqueous dispersion of the resins used in the paint coatings, plastering masses and heating masses.

Calculation methodology is defined in volume percent and shows the relationship of % reflectivity on the length of the spectrum of light and infrared radiation contained in three bands:
a) ultraviolet (200-400nm) -5% energy (only when operating the sun),
b) visible light (400-700nm) -45% energy (only during the day and when the sun is operating),
c) infrared band (700-2500nm) -49% of energy (only during the day and when operating the sun),
   It should be noted that the above parameters are theoretical parameters - in fact, there are no bands (200-400nm) inside the rooms heated by radiators, underfloor or radiant heating, as well as no visible radiation (400-700nm) because the radiators do not shine white.
   In addition, during the day IR infrared radiation gets into our homes, depending on the intensity and length of the day, in the range of 5-45%.
   So, in real terms, it has a smaller share in heating compared to the 700-2500nm band.
d) infrared band (700-2500nm) 49-85% with radiator, floor, wall or ceiling heating.

The TSR (total solar reflection coefficient) for coatings and masses according to the invention is:
- for a spectrum from 600 nm to 1600 nm reflection, **TSR = 97%,**
- for the entire spectrum, i.e. from 400 nm to 2400 nm reflection, **TSR** = **92.69%.**

The solution according to the invention reveals the dependence of the chemical composition between the proportions (volume) of coating components, which is of decisive importance in the ability to reflect energy-reflectivity adequate to the length of the spectrum.

Thanks to the use of a blend of microspheres, in particular polymer microspheres, a high flexibility of the new coating or mass is obtained.

The invention will find application in particular in thermal insulation in heating, hot or very cold process lines, general construction and in particular historic construction, as well as additional insulation on existing older types of insulation.

The growing market of residential and office construction has caused a greater need for cooling and, consequently, a greater demand for electricity for air conditioning. Paint and plaster coatings reflecting solar radiation heating the outside of buildings contribute to lowering energy demand and lowering the cost of electricity and heat through increased reflectivity and reducing temperature differences between the floor and the ceiling (in the range of 1 to 2°C, and not 6 to 10°C as it is most often the case with traditional internal painting coats).
In addition, the location of thermal insulation paint and plaster coatings according to the invention allows the creation of an energy "trap" from the wall and coatings located on the wall, which gives the effect of drying walls all year round (even in autumn, winter and spring) due to the vapor permeability of these coatings and at the same time watertightness.
Paint coatings contain vacuum microspheres, and filled with various gases with reduced energy transmission, which are an essential element of the composition - paints, masses and plasters. The microspheres can be of glass, ceramic, polymer and other origin, in particular polymer microspheres give the coating the desired desired flexibility.

In one variant of the solution according to the invention there is also an additional advantage of the coating, namely - anti-condensation particularly important and needed in housing.

The subject of the invention is explained in the examples and in the drawing in which:

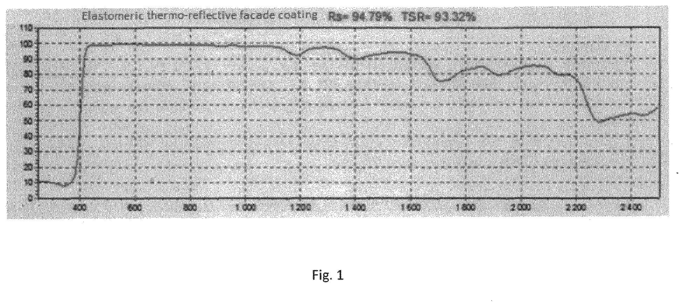

Fig. 1 shows the dependence of the TSR solar radiation reflection coefficient on the wavelength for the obtained coating according to the invention.

### Example 1

Inner coating: 42% of microspheres, 19% of resin used, calculated by volume, and the remainder up to 100% by volume are pigments, fillers and auxiliaries including preservative and coating biocide.

### Example 2

External paint coating: 42% microspheres, 24% resin used, calculated by volume, and the remainder up to 100% by volume are pigments, fillers and auxiliaries including preservative and coating biocide.

### Example 3

Roof paint: 46% microspheres, 28% by volume of resin used, and the remainder up to 100% by volume are pigments, fillers and auxiliaries including preservative and coating biocide.

### Example 4

Plaster masses 62% to 20% resin volume ratio, the remainder up to 100% volume are pigments, fillers and auxiliaries including preservative and coating biocide.

### Example 5

Coatings with anti-condensation properties: ratio of 38% microspheres to resin 35% by volume, the remainder up to 100% by volume are pigments, fillers and auxiliaries including preservative and coating biocide.

### Example 6

For plasters, the ratio of microspheres 62% to resin 20% by volume, at the same time to the whole mixture - the mass is added to 4% by volume of protective elements such as dyes, fungicides and moldicides and UV protection; and the remainder up to 100% vol. are pigments, fillers and auxiliary agents including biocide (0.4% by volume), conservation and coating.

## Claims

1. The method of manufacturing thermoreflexive and thermoinsulating coatings, **characterized in that** microspheres are joined and mixed up to an aqueous dispersion of resin based on acrylic and / or styrene-acrylic monomers and / or alkyd and / or vinyl acetate and its copolymers preferably such as OW / ethylene, whereby the microspheres are combined with maintaining the ratio of the microspheres used as a percentage by volume to the aqueous dispersion of the resin, maintaining the vol.% ratio for specific product types, where:
a) for paint coatings:
1. internal paint coating: 20-42% microspheres up to 38-19% of the resin used, calculated by volume, with the minimum total content of microspheres and resin being **(20 + 38 = 58)** vol.% while max. content from **(42 + 19 = 61)**% vol, and the remaining part up to 100% vol. are pigments, fillers and auxiliaries including preservative and coating biocide;
2. outer paint coating: 18-42% microspheres up to 43-24% of the resin used, calculated by volume, the minimum total content of microspheres and resin is **(18 + 43 = 61)**% vol, while max. content with **(42 + 24 = 66)** vol% and the remaining part up to 100% vol. are pigments, fillers and auxiliaries including preservative and coating biocide.
3. roof paint: 28-46% of microspheres up to 43-28% of the volume-based resin used
the minimum total content of microspheres and resin is **(28 + 43 = 71)** vol % while
max. content from (**46** + **28 = 74)% vol.** and the remaining part up to 100% vol. are pigments, fillers and auxiliaries including preservative and coating biocide.
b) for plasters:
the ratio of microspheres to 62-28% to resin is in the range (20-42)% by volume.
the minimum total content of microspheres and resin is (**62 + 20 = 82)** vol % while
max. content with (**28 + 42 = 70) vol%** and the remaining part up to 100% vol. are pigments, fillers and auxiliaries including preservative and coating biocide.
c) for coatings with anti-condensation properties:
ratio of microspheres ranging from 20-38% to resin 44-35% by volume
while for each of the products the ratio of the volume of microspheres to resin is preferably in the form of 2: 1, while the final coating obtained in this way is **characterized by** the total solar radiation reflection coefficient (TSR) for the spectrum from 400 nm to 1600 nm at a level from 92 to 97% while providing a material flexibility of up to 400%, preferably 300% flexibility.

2. The method according to claim 1, **characterized in that** the microspheres are evenly distributed in the resulting coating.

3. The method according to claim 1, **characterized in that** the microspheres are glass, ceramic, polymeric microspheres or a mixture thereof, the microspheres having sizes ranging from 1 µm to 100 µm, preferably 1/3 of the microspheres being thermal traps.

4. The method according to claim 1, **characterized in that** the final coating is applied to other materials such as walls, old walls, walls, mineral wool, polystyrene and / or their arrangement or metal elements such as pipes.

5. The method according to claim 1, **characterized in that** the final coating is vapor-permeable.

6. The method according to claim 1, **characterized in that** in place of the resin an acrylic resin is used at a level of up to 50% by volume with the simultaneous addition of biocide in an amount of up to 0.4% by volume, thereby obtaining a coating with additional anti-condensation properties.

7. The method according to claim 1, **characterized in that** the final coating is applied as a layer and / or layers with a total thickness of 0.5 to 30 mm, preferably 3 mm, on materials preferably such as: walls, old walls, walls, wool mineral, expanded polystyrene and / or their arrangement, the layer / layers applied in this way being a mirror, i.e. a thermally reflective coating, at the same time constituting an additional thermal barrier.
c) for coatings with anti-condensation properties, the ratio of microspheres to 20-38% to resin is in the range of (41-28)% by volume, with the minimum total content of microspheres and resin being **(20 + 41 = 61)%** vol. while max. content from **(38 + 28 = 70)% vol.** and the remaining part up to 100% vol. are pigments, fillers and auxiliaries including preservative and coating biocide.

8. The method of manufacturing thermoreflexive and thermoinsulating masses, **characterized in that** microspheres are joined and mixed up to an aqueous dispersion of resin based on acrylic and / or styrene-acrylic monomers and / or alkyd and / or vinyl acetate and its copolymers preferably such as OW / ethylene, wherein the microspheres are combined with maintaining the ratio of the microspheres used in volume percent to the aqueous dispersion of the resin while maintaining the ratio, where for plaster masses the ratio of microspheres to 62-28% to resin is in the range (20-42)% by volume; the minimum total content of microspheres and resin is **(62 + 20 = 82)** vol % while max. content with **(28 + 42 = 70) vol%,** at the same time, to the whole mixture - mass, up to 4% by volume of protective elements such as dyes, fungicidal and mildewcide substances and UV protection are added;
while for each of the products the ratio of the volume of microspheres to resin is preferably in the form of 2: 1, while the final coating obtained in this way is **characterized by** the total solar radiation reflection coefficient (TSR) for the spectrum from 400 nm to 1600 nm at a level from 92 to 97% while providing a material flexibility of up to 400%, preferably 300% flexibility.
